(19) Europäisches Patentamt
European Patent Office
Office européen des brevets

(11) **EP 4 027 270 A1**

(12) **EUROPEAN PATENT APPLICATION**

(43) Date of publication:
**13.07.2022 Bulletin 2022/28**

(21) Application number: **21203124.9**

(22) Date of filing: **18.10.2021**

(51) International Patent Classification (IPC):
**G06N 3/08** *(2006.01)*　　　**G06N 3/04** *(2006.01)*

(52) Cooperative Patent Classification (CPC):
**G06N 3/0454; G06N 3/08**

---

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.01.2021　JP 2021000937**

(71) Applicant: **FUJITSU LIMITED**
**Kawasaki-shi, Kanagawa 211-8588 (JP)**

(72) Inventor: **YAMADA, Moyuru**
**Kanagawa, 211-8588 (JP)**

(74) Representative: **Hoffmann Eitle**
**Patent- und Rechtsanwälte PartmbB**
**Arabellastraße 30**
**81925 München (DE)**

---

(54) **DETERMINATION MODEL GENERATION PROGRAM, INFORMATION PROCESSING APPARATUS, AND DETERMINATION MODEL GENERATION METHOD**

(57)　A determination model generation program that causes at least one computer to execute a process, the process includes generating, based on first training data in which image data and character string data that corresponds to the image data are associated with each other, second training data by replacing one of data included in the first training data selected from the image data and the character string data with another data; and generating, by using the first training data and the second training data as input data, a determination model that outputs information that indicates which training data selected from the first training data and the second training data is training data in which correspondence between the image data and the character string data is correct.

FIG. 8

**Description**

FIELD

The embodiment discussed herein is related to a determination model generation program, an information processing apparatus, and a determination model generation method.

BACKGROUND

In recent years, when an image that matches contents of a sentence (hereinafter, also referred to as a character string) or a sentence that matches contents of an image is searched for, a machine learning model (hereinafter, also referred to as a determination model) that determines a degree of matching between an image and a sentence may be used.

Such a determination model calculates a degree of matching between an image and a sentence by, for example, learning not only a pair of an image and sentence whose contents correspond to each other, but also a pair obtained by replacing one of the image and the sentence with another sample.

Jiasen Lu, Dhruv Batra, Devi Parikh, Stefan Lee, "ViLBERT: Pretraining Task-Agnostic Visiolinguistic Representations for Vision-and-Language Tasks", URL: https://arxiv.org/pdf/1908.02265.pdf is disclosed as related art.

SUMMARY

[TECHNICAL PROBLEM]

Here, the determination model as described above is trained by inputting a plurality of pairs of sentences and images at the same time, for example. With this configuration, the determination model may proceed with learning about a relationship between pieces of data, as compared with a case where, for example, the determination model is trained by inputting a pair of a sentence and an image one by one.

However, for example, in a case where learning is performed by using a plurality of pairs in which both images and sentences are randomly determined, the determination model may not be able to sufficiently learn about characteristics of each pair, and may not be able to calculate a degree of matching between an image and a sentence with sufficient accuracy.

Therefore, in one aspect, an embodiment aims to provide a determination model generation program, an information processing apparatus, and a determination model generation method that enable generation of a determination model that accurately determines correspondence between an image and a sentence.

[SOLUTION TO PROBLEM]

According to an aspect of the embodiments, a determination model generation program that causes at least one computer to execute a process, the process includes generating, based on first training data in which image data and character string data that corresponds to the image data are associated with each other, second training data by replacing one of data included in the first training data selected from the image data and the character string data with another data; and generating, by using the first training data and the second training data as input data, a determination model that outputs information that indicates which training data selected from the first training data and the second training data is training data in which correspondence between the image data and the character string data is correct.

[ADVANTAGEOUS EFFECTS OF INVENTION]

According to one aspect, it is possible to generate a determination model that accurately determines correspondence between an image and a sentence.

BRIEF DESCRIPTION OF DRAWINGS

FIG. 1 is a diagram illustrating a configuration of an information processing system 10;
FIG. 2 is a diagram illustrating a determination model MD11 in a first comparative example;
FIG. 3 is a diagram illustrating the determination model MD11 in the first comparative example;
FIG. 4 is a diagram illustrating a determination model MD12 in a second comparative example;

FIG. 5 is a diagram illustrating the determination model MD12 in the second comparative example;

FIG. 6 is a diagram illustrating a hardware configuration of an information processing apparatus 1;

FIG. 7 is a block diagram of functions of the information processing apparatus 1;

FIG. 8 is a flowchart illustrating an outline of determination model generation processing in a first embodiment;

FIG. 9 is a diagram illustrating processing of a determination model MD1 in the first embodiment;

FIG. 10 is a diagram illustrating processing of the determination model MD1 in the first embodiment;

FIG. 11 is a flowchart illustrating details of the determination model generation processing in the first embodiment;

FIG. 12 is a flowchart illustrating the details of the determination model generation processing in the first embodiment;

FIG. 13 is a flowchart illustrating the details of the determination model generation processing in the first embodiment;

FIG. 14 is a flowchart illustrating the details of the determination model generation processing in the first embodiment;

FIG. 15 is a flowchart illustrating the details of the determination model generation processing in the first embodiment;

FIG. 16 is a flowchart illustrating the details of the determination model generation processing in the first embodiment;

FIG. 17 is a flowchart illustrating the details of the determination model generation processing in the first embodiment;

FIG. 18 is a flowchart illustrating the details of the determination model generation processing in the first embodiment;

FIG. 19 is a diagram illustrating processing of a determination model MD2 in the first embodiment; and

FIG. 20 is a diagram illustrating the processing of the determination model MD2 in the first embodiment.

DESCRIPTION OF EMBODIMENTS

[Configuration of Information Processing System]

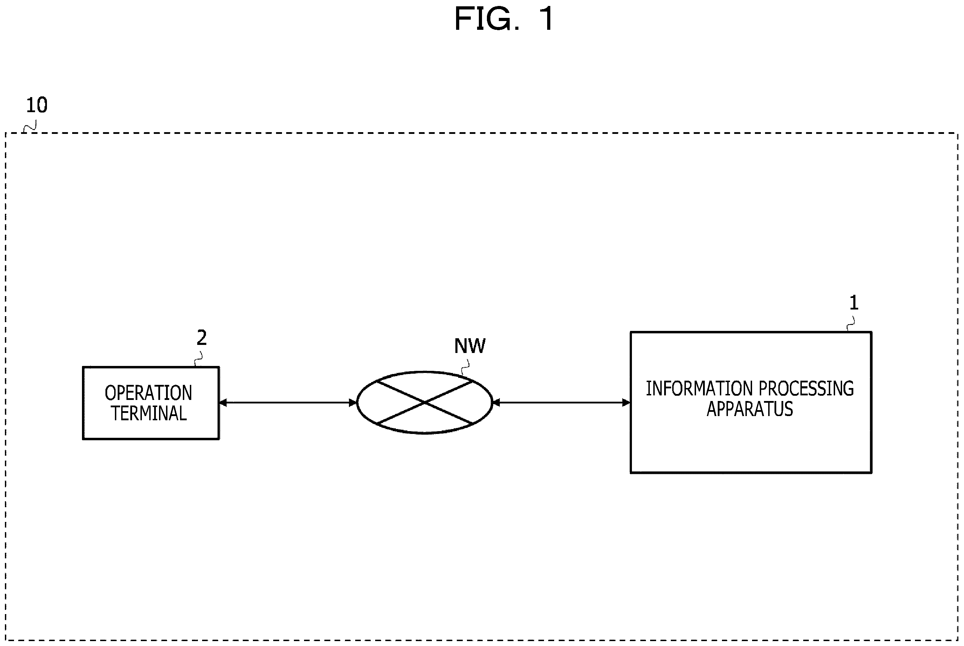

First, a configuration of an information processing system 10 will be described. FIG. 1 is a diagram illustrating the configuration of the information processing system 10.

The information processing system 10 illustrated in FIG. 1 includes, for example, an information processing apparatus 1 including one or more physical machines, and an operation terminal 2 in which an operator who generates a determination model (hereinafter, also simply referred to as an operator) performs input of necessary information, or the like. The operation terminal 2 may be, for example, a personal computer (PC). Furthermore, the information processing apparatus 1 and the operation terminal 2 are connected via a network NW such as the Internet, for example.

The information processing apparatus 1 generates a determination model by using, for example, a plurality of pieces of training data prepared in advance. Hereinafter, determination models in comparative examples will be described.

[Determination Model in First Comparative Example]

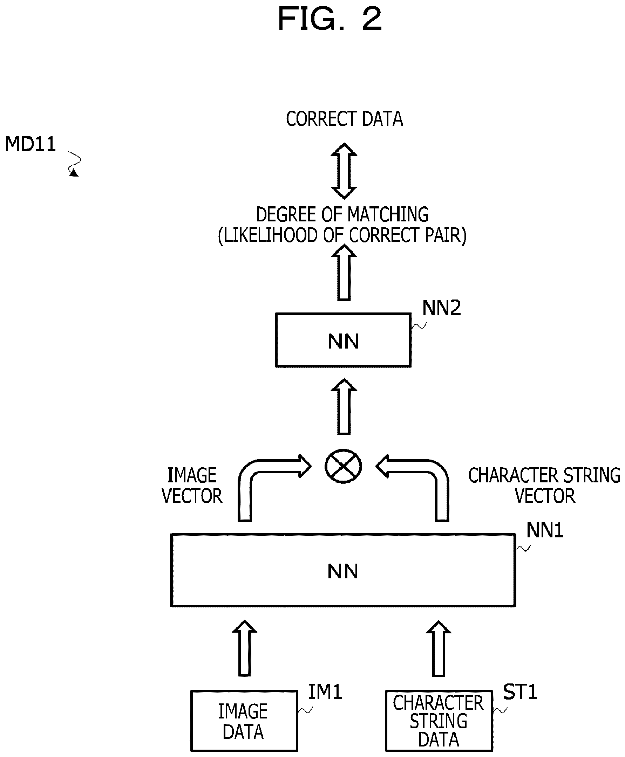

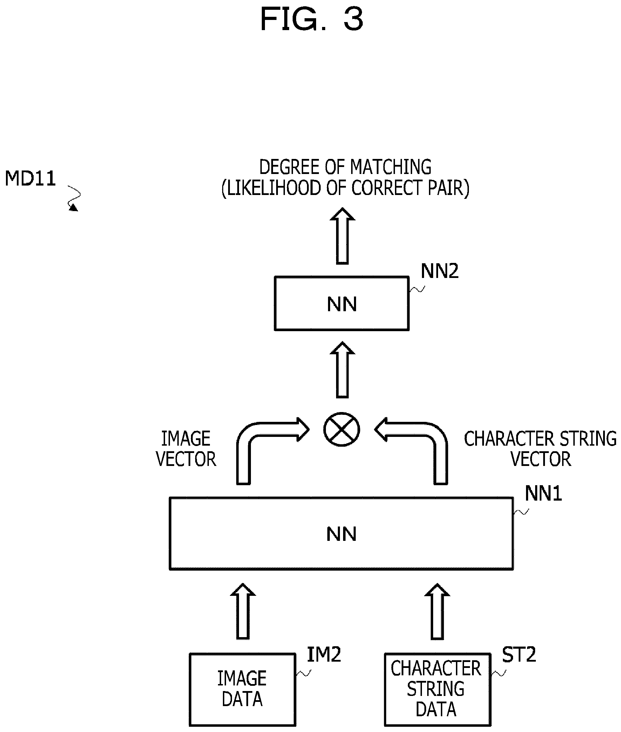

FIGs. 2 and 3 are diagrams illustrating a determination model MD11 in a first comparative example. For example, FIG. 2 is a diagram illustrating processing of the determination model MD11 in a learning stage. Furthermore, FIG. 3 is a diagram illustrating processing of the determination model MD11 in an inference stage. A first neural network NN1 may be, for example, Transformer. Furthermore, a second neural network NN2 may be, for example, a liner network for learning a score function.

Note that, hereinafter, description will be made assuming that each determination model includes the neural network NN1 (hereinafter, also referred to as the first neural network NN1) and the neural network NN2 (hereinafter, also referred to as the second neural network NN2).

First, the processing of the determination model MD11 in the learning stage will be described.

As illustrated in FIG. 2, the information processing apparatus 1 inputs, to the first neural network NN1, a pair of image data IM1 and character string data ST1 that are included in training data for learning. For example, the information processing apparatus 1 inputs, to the first neural network NN1, a pair of image data IM1 and character string data ST1 whose contents correspond to each other, or a pair of image data IM1 and character string data ST1 whose contents do not correspond.

Then, in response to reception of input of the pair of image data IM1 and character string data ST1, the first neural network NN1 calculates and outputs a vector indicating characteristics of the image data IM1 (hereinafter, also referred to as an image vector) and a vector indicating characteristics of the character string data ST1 (hereinafter, also referred to as a character string vector).

Subsequently, for example, the information processing apparatus 1 calculates an element product of the image vector and the character string vector that are output from the first neural network NN1, and inputs the element product to the second neural network NN2.

Then, for example, in response to reception of input of the element product, the second neural network NN2 calculates and outputs a degree of matching between the contents indicated by the image data IM1 and the contents indicated by the character string data ST1.

Thereafter, for example, the information processing apparatus 1 adjusts weights of the first neural network NN1 and the second neural network NN2 such that an error between the degree of matching output by the second neural network and a value (correct data) indicating whether or not the contents indicated by the image data IM1 and the contents indicated by the character string data ST1 correspond to each other becomes small.

Next, the processing of the determination model MD11 in the inference stage will be described.

As illustrated in FIG. 3, for example, in a case where training data to be inferred (hereinafter, also referred to as new training data) is input via the operation terminal 2, the information processing apparatus 1 inputs a pair of image data IM2 and character string data ST2 that are included in the new training data to the first neural network NN1.

Then, in response to reception of input of the pair of image data IM2 and character string data ST2, the first neural network NN1 calculates and outputs an image vector indicating characteristics of the image data IM2 and a character string vector indicating characteristics of the character string data ST2.

Subsequently, for example, the information processing apparatus 1 calculates an element product of the image vector and the character string vector that are output from the first neural network NN1, and inputs the element product to the second neural network NN2.

Then, for example, in response to reception of input of the element product, the second neural network NN2 calculates and outputs a degree of matching between contents indicated by the image data IM2 and contents indicated by the character string data ST2.

Thereafter, the information processing apparatus 1 outputs, for example, the degree of matching output by the second neural network to the operation terminal 2 as a degree of matching between the image data IM2 and the character string data ST2 that are included in the new training data.

Here, for example, in a case where training is performed by inputting a pair of image data IM1 and character string data ST1 one by one, it is not possible for the determination model MD11 to totally optimize learning, for example, it is not possible to learn about a relationship between pieces of data. Therefore, for example, in a case where image data IM2 and character string data ST2 related to the same object are input in the inference stage, the determination model MD11 may output a high degree of matching even in a case where contents of the image data IM2 and contents of the character string data ST2 indicate different situations.

[Determination Model in Second Comparative Example]

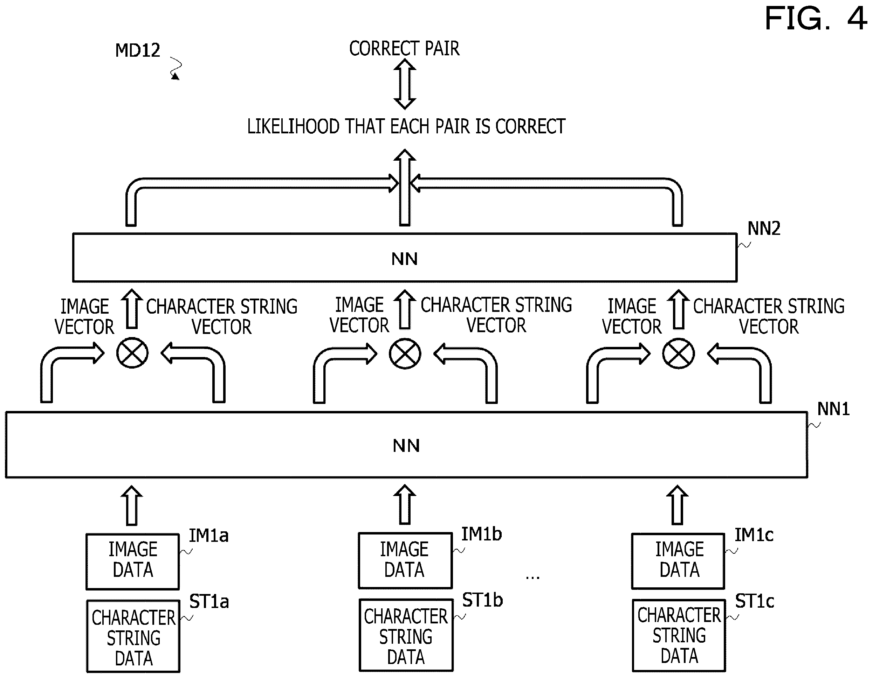

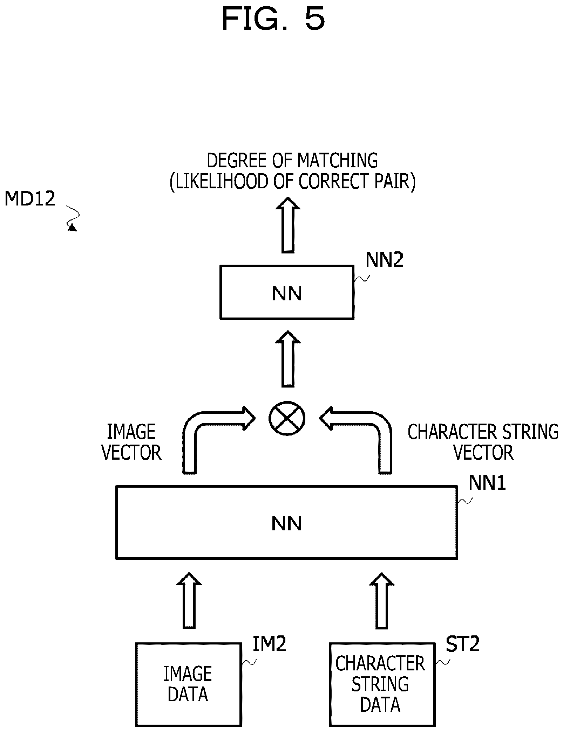

Next, a determination model MD12 in a second comparative example will be described. FIGs. 4 and 5 are diagrams illustrating the determination model MD12 in the second comparative example. For example, FIG. 4 is a diagram illustrating processing of the determination model MD12 in a learning stage. Furthermore, FIG. 5 is a diagram illustrating processing of the determination model MD12 in an inference stage.

Note that, hereinafter, image data IM1a, image data IM1b, and image data IM1c are also collectively referred to simply as image data IM1, and character string data ST1a, character string data ST1b, and character string data ST1c are also collectively referred to simply as character string data ST1.

First, the processing of the determination model MD12 in the learning stage will be described.

As illustrated in FIG. 4, the information processing apparatus 1 inputs, to the first neural network NN1, a plurality of pairs of image data IM1 and character string data ST1 that are included in training data for learning. For example, the information processing apparatus 1 inputs, to the first neural network NN1, one pair of image data IM1 and character string data ST1 whose contents correspond to each other, and a plurality of pairs of image data IM1 and character string data ST1 whose contents do not correspond.

For example, as illustrated in FIG. 4, the information processing apparatus 1 inputs, to the first neural network NN1, a plurality of pairs including a pair of image data IM1a and character string data ST1a whose contents correspond to each other, a pair of image data IM1b and character string data ST1b whose contents do not correspond, and a pair of image data IM1c and character string data ST1c whose contents do not correspond.

Then, in response to reception of input of the pairs of image data IM1 and character string data ST1, the first neural network NN1 calculates and outputs image vectors indicating characteristics of the image data IM1 and character string vectors indicating characteristics of the character string data ST1.

Subsequently, for example, the information processing apparatus 1 calculates element products of the image vectors and the character string vectors that are output from the first neural network NN1, and inputs the element products to the second neural network NN2.

Then, for example, in a case where input of the plurality of element products is received, the second neural network NN2 calculates and outputs, for each pair of image data IM1 and character string data ST1, a degree of matching between the image data IM1 and the character string data ST1 that are included in each pair.

Thereafter, for example, the information processing apparatus 1 adjusts the weights of the first neural network NN1 and the second neural network NN2 such that a classification error (cross entropy) calculated from the plurality of degrees of matching output by the second neural network and information indicating the pair of image data IM1 and character string data ST1 whose contents correspond to each other (hereinafter, also referred to as a correct pair) becomes small.

Next, the processing of the determination model MD12 in the inference stage will be described.

As illustrated in FIG. 5, for example, in a case where new training data is input via the operation terminal 2, the information processing apparatus 1 inputs, to the first neural network NN1, a pair of image data IM2 and character string data ST2 that are included in the new training data.

Then, in response to reception of input of the pair of image data IM2 and character string data ST2, the first neural network NN1 calculates and outputs an image vector indicating characteristics of the image data IM2 and a character string vector indicating characteristics of the character string data ST2.

Subsequently, for example, the information processing apparatus 1 calculates an element product of the image vector and the character string vector that are output from the first neural network NN1, and inputs the element product to the second neural network NN2.

Then, for example, in response to reception of input of the element product, the second neural network NN2 calculates and outputs a degree of matching between contents indicated by the image data IM2 and contents indicated by the character string data ST2.

Thereafter, the information processing apparatus 1 outputs, for example, the degree of matching output by the second neural network to the operation terminal 2 as a degree of matching between the image data IM2 and the character string data ST2 that are included in the new training data.

For example, the determination model MD12 is trained by using the plurality of pairs of image data IM1 and character string data ST1 at the same time. With this configuration, the determination model MD12 may proceed with learning of a relationship between pieces of training data as compared with the determination model MD11 described with reference to FIGs. 2 and 3, and may perform learning that is totally optimized.

However, for example, in a case where training is performed by using a plurality of pairs in which both the image data IM1 and the character string data ST1 are randomly determined, it is not possible for the determination model MD12 to sufficiently learn about characteristics of each pair. Thus, it may not possible for the determination model MD12 to calculate the degree of matching between the image data IM2 and the character string data ST2 with sufficient accuracy in the inference stage.

Therefore, the information processing apparatus 1 in the present embodiment generates, on the basis of training data (hereinafter, also referred to as first training data) in which image data IM1 and character string data ST1 corresponding to the image data IM1 are associated with each other, training data (hereinafter, also referred to as second training data) by replacing one of the image data IM1 and the character string data ST1 that are included in the first training data with another data.

Then, the information processing apparatus 1 generates, by using the first training data and the second training data as input data, a determination model that outputs information indicating which piece of training data in the first training data and the second training data is training data in which correspondence between the image data IM1 and the character string data ST1 is correct.

For example, the information processing apparatus 1 in the present embodiment generates, in a case where a plurality of pairs of image data IM1 and character string data ST1 to be input to the determination model is generated, the plurality of pairs by combining different character string data ST1 with the same image data IM1. Furthermore, in this case, the information processing apparatus 1 generates the plurality of pairs by combining different image data IM1 with the same character string data ST1. Then, the information processing apparatus 1 generates the determination model by causing the determination model to learn a degree of similarity calculated for each of the generated plurality of pairs.

With this configuration, the information processing apparatus 1 may cause a determination model to learn a more detailed relationship between pieces of training data, and may generate a determination model that accurately determines correspondence between image data IM1 and character string data ST1.

[Hardware Configuration of Information Processing Apparatus]

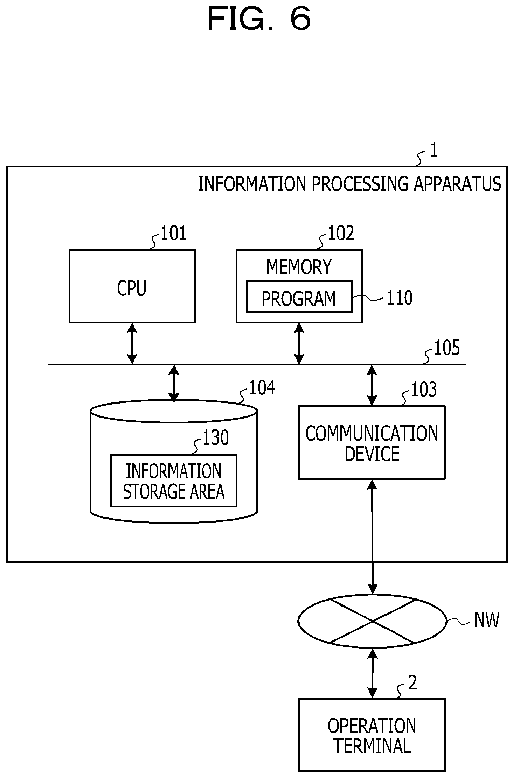

Next, a hardware configuration of the information processing apparatus 1 will be described. FIG. 6 is a diagram illustrating the hardware configuration of the information processing apparatus 1.

As illustrated in FIG. 6, the information processing apparatus 1 includes a central processing unit (CPU) 101 as a processor, a memory 102, a communication device 103, and a storage medium 104. Each of the units is connected to each other via a bus 105.

The storage medium 104 includes, for example, a program storage area (not illustrated) that stores a program 110 for performing determination model generation processing. Furthermore, the storage medium 104 includes, for example, an information storage area 130 that stores information used when the determination model generation processing is performed. Note that the storage medium 104 may be, for example, a hard disk drive (HDD) or a solid state drive (SSD).

The CPU 101 executes the program 110 loaded from the storage medium 104 into the memory 102 to perform the determination model generation processing.

Furthermore, the communication device 103 communicates with the operation terminal 2 via the network NW, for example.

[Functions of Information Processing Apparatus]

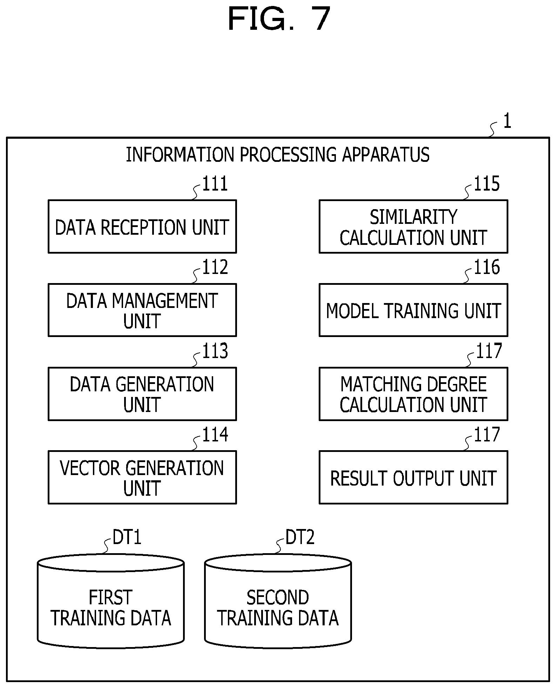

Next, functions of the information processing apparatus 1 will be described. FIG. 7 is a block diagram of the functions of the information processing apparatus 1.

As illustrated in FIG. 7, the information processing apparatus 1 implements various functions including a data reception unit 111, a data management unit 112, a data generation unit 113, a vector generation unit 114, a similarity calculation unit 115, a model training unit 116, a matching degree calculation unit 117, and a result output unit 118, for example, by hardware such as the CPU 101 and the memory 102 organically cooperating with the program 110.

Furthermore, as illustrated in FIG. 7, the information processing apparatus 1 stores, for example, first training data DT1, second training data DT2, and new training data DT3 in the information storage area 130.

First, the functions in a learning stage will be described.

The data reception unit 111 receives, for example, the first training data DT1 transmitted from the operation terminal 2. The first training data DT1 is training data including image data IM1 and character string data ST1 whose contents correspond to each other. Then, the data management unit 112 stores, for example, the first training data DT1 received by the data reception unit 111 in the information storage area 130.

The data generation unit 113 generates the second training data DT2 on the basis of the first training data DT1 stored in the information storage area 130. The second training data DT2 is training data obtained by replacing one of the image data IM1 and the character string data ST1 that are included in the first training data DT1 with another data. For example, the second training data DT2 is training data including image data IM1 and character string data ST1 whose contents do not correspond. Then, the data management unit 112 stores, for example, the second training data DT2 generated by the data generation unit 113 in the information storage area 130.

The vector generation unit 114 generates an image vector indicating characteristics of each of the image data IM1 included in the first training data DT1 and the second training data DT2 by inputting the first training data DT1 and the second training data DT2 that are stored in the information storage area 130 to the first neural network NN1. Furthermore, the vector generation unit 114 generates character string vectors indicating characteristics of the character string data ST1 included in the first training data DT1 and the second training data DT2 by inputting the first training data DT1 and the second training data DT2 that are stored in the information storage area 130 to the first neural network NN1.

The similarity calculation unit 115 calculates, for example, an inner product of an image vector and a character string vector that are generated by the vector generation unit 114 from the first training data DT1 as a degree of similarity between the image data IM1 and the character string data ST1 that are included in the first training data DT1. Furthermore, the similarity calculation unit 115 calculates, for example, an inner product of an image vector and a character string vector that are generated by the vector generation unit 114 from the second training data DT2 as a degree of similarity between the image data IM1 and the character string data ST1 that are included in the second training data DT2.

The model training unit 116 calculates, for example, a classification error from each degree of similarity calculated by the similarity calculation unit 115 and information indicating the first training data DT1 (hereinafter, also referred to as first information). Then, the model training unit 116 adjusts (learns) the weight of the first neural network NN1 such that the calculated classification error becomes small.

The matching degree calculation unit 117 calculates, for example, an element product of an image vector and a character string vector that are generated by the vector generation unit 114 from the first training data DT1. Furthermore, the matching degree calculation unit 117 calculates, for example, an element product of an image vector and a character string vector that are generated by the vector generation unit 114 from the second training data DT2. For example, the matching degree calculation unit 117 calculates an element product for one piece of the first training data DT1 and element products for a plurality of pieces of second training data DT2.

Then, the matching degree calculation unit 117 calculates, for example, a degree of matching between the image data IM1 and the character string data ST1 that are included in the first training data DT1 by inputting the element product for the first training data DT1 to the second neural network NN2. Furthermore, the matching degree calculation unit 117 calculates, for example, degrees of matching between the image data IM1 and the character string data ST1 that are included in the second training data DT2 by inputting the element products for the second training data DT2 to the second neural network NN2.

Moreover, for example, the model training unit 116 adjusts the weights of the first neural network NN1 and the second neural network NN2 such that an error between the degree of matching for the first training data DT1 and a value corresponding to the first training data DT1 (hereinafter, also referred to as second information) becomes small. Furthermore, for example, the model training unit 116 adjusts the weights of the first neural network NN1 and the second neural network NN2 such that an error between the degrees of matching for the second training data DT2 and a value corresponding to the second training data DT2 becomes small.

Next, the functions in an inference stage will be described.

The data reception unit 111 receives, for example, the new training data DT3 transmitted from the operation terminal 2. Then, the data management unit 112 stores, for example, the new training data DT3 received by the data reception unit 111 in the information storage area 130.

The vector generation unit 114 generates an image vector indicating characteristics of image data IM2 included in the new training data DT3 by inputting the new training data DT3 received by the data reception unit 111 to the first neural network NN1. Furthermore, the vector generation unit 114 generates a character string vector indicating characteristics of character string data ST2 included in the new training data DT3 by inputting the new training data DT3 to the first neural network NN1.

The similarity calculation unit 115 calculates, for example, an inner product of an image vector and a character string vector that are generated by the vector generation unit 114 from the new training data DT3 as a degree of similarity between the image data IM2 and the character string data ST2 that are included in the new training data DT3.

The matching degree calculation unit 117 calculates, for example, an element product of an image vector and a character string vector that are generated by the vector generation unit 114 from the new training data DT3.

Then, the matching degree calculation unit 117 calculates, for example, a degree of matching between the image data IM2 and the character string data ST2 that are included in the new training data DT3 by inputting the element product for the new training data DT3 to the second neural network NN2.

The result output unit 118 outputs, for example, a degree of similarity calculated by the similarity calculation unit 115 to the operation terminal 2 as a degree of similarity between the image data IM2 and the character string data ST2 that are included in the new training data DT3. Furthermore, the result output unit 118 outputs, for example, a degree of matching calculated by the matching degree calculation unit 117 to the operation terminal 2 as a degree of matching between the image data IM2 and the character string data ST2 that are included in the new training data DT3.

Note that, hereinafter, a case where the matching degree calculation unit 117 calculates an element product of an image vector and a character string vector will be described. However, the matching degree calculation unit 117 may calculate, for example, the vector sum of an image vector and a character string vector. Then, in this case, the matching degree calculation unit 117 may input the calculated vector sum to the second neural network NN2.

[Outline of First Embodiment]

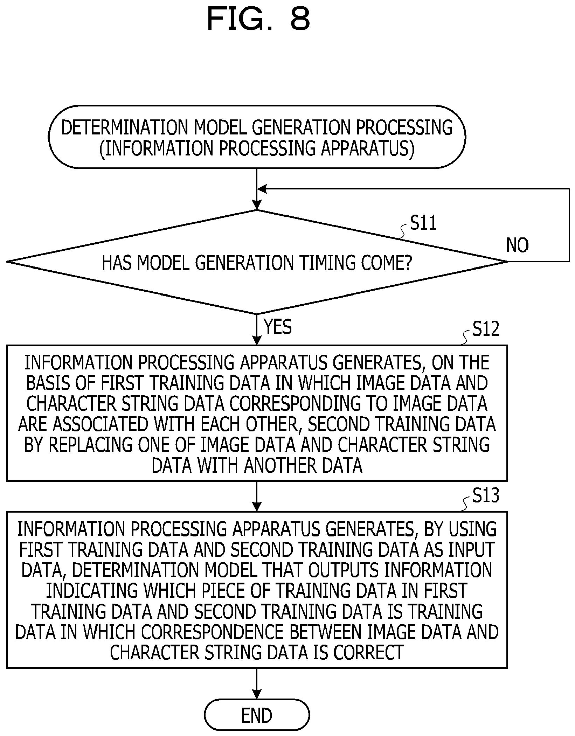

Next, an outline of a first embodiment will be described. FIG. 8 is a flowchart illustrating an outline of determination model generation processing in the first embodiment.

As illustrated in FIG. 8, the information processing apparatus 1 stands by until, for example, a model generation timing comes (NO in S11). The model generation timing may be, for example, a timing at which an operator inputs that a determination model is to be generated.

Then, in a case where the model generation timing comes (YES in S11), the information processing apparatus 1 generates, on the basis of the first training data DT1 in which the image data IM1 and the character string data ST1 corresponding to the image data IM1 are associated with each other, the second training data DT2 by replacing one of the image data IM1 and the character string data ST1 with another data (S12).

Moreover, the information processing apparatus 1 generates, by using the first training data DT1 and the second training data DT2 as input data, a determination model that outputs information indicating which piece of training data in the first training data DT1 and the second training data DT2 is training data in which correspondence between the image data IM1 and the character string data ST1 is correct (S13).

With this configuration, the information processing apparatus 1 may cause the determination model to learn a detailed relationship between pieces of the training data. Therefore, the information processing apparatus 1 may generate the determination model that accurately determines correspondence between the image data IM1 and the character string data ST1.

Furthermore, by replacing one of the image data IM1 and the character string data ST1 that are included in the first training data DT1 with another data to generate the second training data DT2, the information processing apparatus 1 may suppress increase in a work load and work time needed to generate the second training data DT2.

[Specific Example (1) of Determination Model]

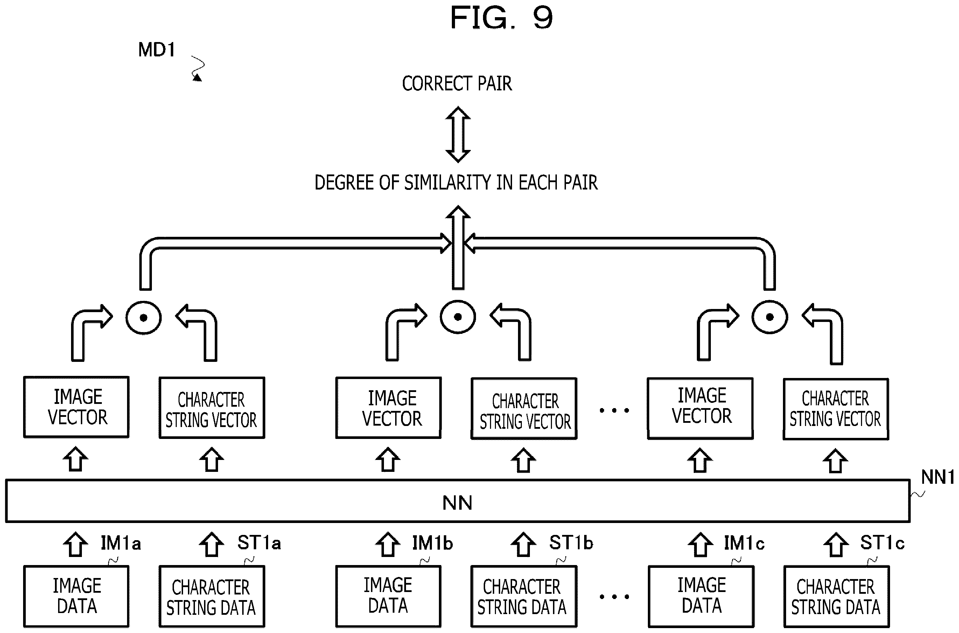

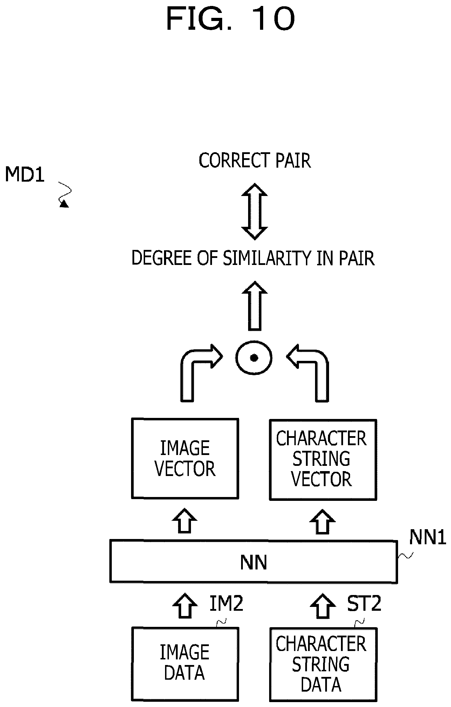

Next, a determination model MD1 in the first embodiment will be described. FIGs. 9 and 10 are diagrams illustrating processing of the determination model MD1 in the first embodiment.

First, processing of the determination model MD1 in a learning stage will be described.

As illustrated in FIG. 9, the information processing apparatus 1 inputs, to the first neural network NN1, a pair of image data IM1 and character string data ST1 that are included in the first training data DT1 and pairs of image data IM1 and character string data ST1 that are included in the second training data DT2.

For example, as illustrated in FIG. 9, the information processing apparatus 1 inputs, to the first neural network NN1, a plurality of pairs including a pair of image data IM1a and character string data ST1a that are included in the first training data DT1, a pair of image data IM1b and character string data ST1b that are included in the second training data DT2, and a pair of image data IM1c and character string data ST1c that are included in the second training data DT2.

Then, for example, in response to reception of input of the pair of image data IM1a and character string data ST1a, the first neural network NN1 calculates and outputs an image vector indicating characteristics of the image data IM1a and a character string vector indicating characteristics of the character string data ST1a. Similarly, for example, in response to reception of input of the pair of image data IM1b and character string data ST1b, the first neural network NN1 calculates and outputs an image vector indicating characteristics of the image data IM1b and a character string vector indicating characteristics of the character string data ST1b. Moreover, for example, in response to reception of input of the pair of image data IM1c and character string data ST1c, the first neural network NN1 calculates and outputs an image vector indicating characteristics of the image data IM1c and a character string vector indicating characteristics of the character string data ST1c.

Next, the information processing apparatus 1 calculates, for example, an inner product of the image vector corresponding to the image data IM1a and the character string vector corresponding to the character string data ST1a as a degree of similarity between the image data IM1a and the character string data ST1a. Similarly, the information processing apparatus 1 calculates, for example, an inner product of the image vector corresponding to the image data IM1b and the character string vector corresponding to the character string data ST1b as a degree of similarity between the image data IM1b and the character string data ST1b. Moreover, the information processing apparatus 1 calculates, for example, an inner product of the image vector corresponding to the image data IM1c and the character string vector corresponding to the character string data ST1c as a degree of similarity between the image data IM1c and the character string data ST1c.

Thereafter, for example, the information processing apparatus 1 adjusts the weight of the first neural network NN1 such that a classification error calculated from the degree of similarity for each of the first training data DT1 and the second training data DT2 and information specifying the pair (correct pair) of image data IM1 and character string data ST1 that are included in the first training data DT1 becomes small.

Next, processing of the determination model MD1 in an inference stage will be described.

As illustrated in FIG. 10, the information processing apparatus 1 inputs, to the first neural network NN1, a pair of image data IM2 and character string data ST2 that are included in the new training data DT3.

Then, for example, in response to reception of input of the pair of image data IM2 and character string data ST2, the first neural network NN1 calculates and outputs an image vector indicating characteristics of the image data IM2 and a character string vector indicating characteristics of the character string data ST2.

Thereafter, the information processing apparatus 1 calculates, for example, an inner product of the image vector corresponding to the image data IM2 and the character string vector corresponding to the character string data ST2 as a degree of similarity between the image data IM2 and the character string data ST2.

Then, the information processing apparatus 1 outputs, for example, the calculated degree of similarity to the operation terminal 2 as a degree of similarity between the image data IM2 and the character string data ST2 that are included in the new training data DT3.

For example, unlike the case described with reference to FIGs. 2 to 5, the information processing apparatus 1 generates the determination model MD1 using only the first neural network NN1 (determination model MD1 having no second neural network NN2).

With this configuration, the information processing apparatus 1 may generate the first neural network NN1 capable of outputting an image vector and character string vector different for each piece of training data.

[Details of First Embodiment]

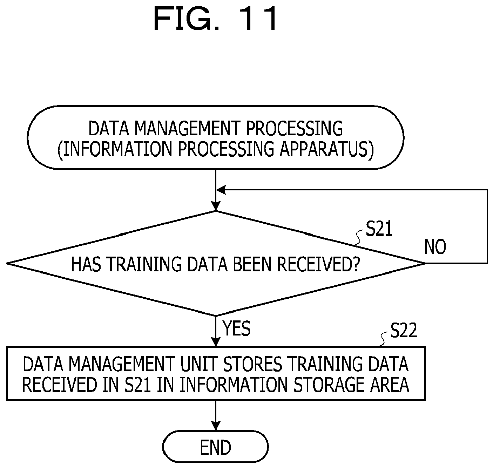

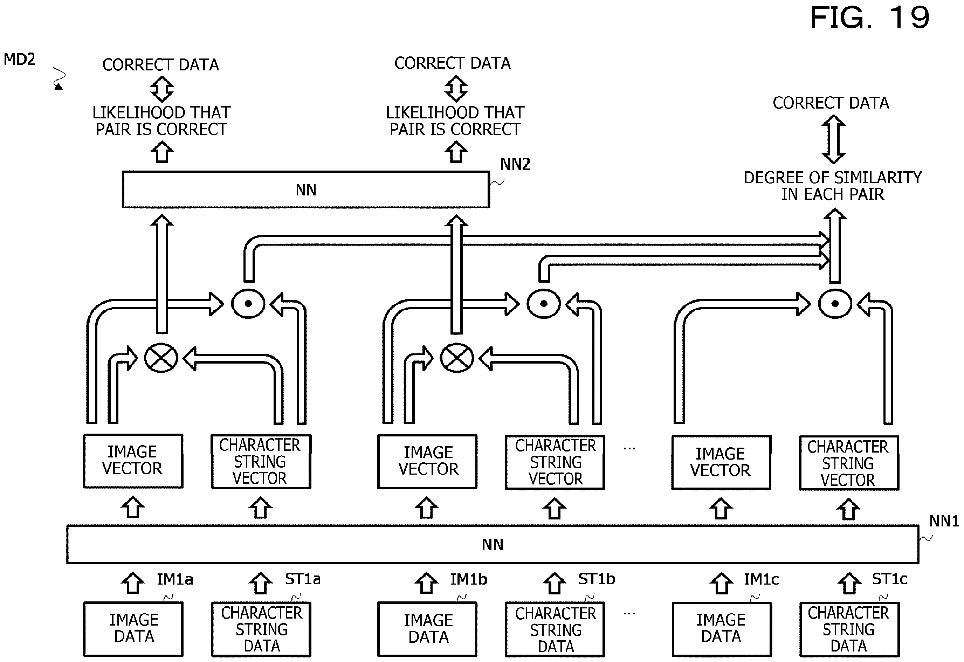

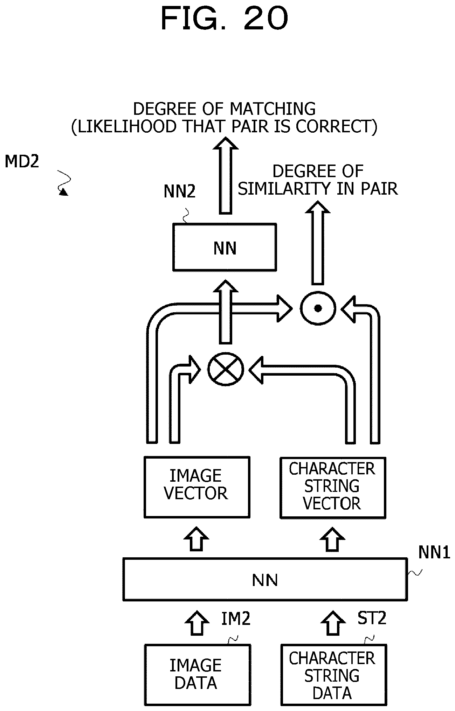

Next, details of the first embodiment will be described. FIGs. 11 to 18 are flowcharts illustrating details of the determination model generation processing in the first embodiment. Furthermore, FIGs. 19 and 20 are diagrams illustrating the details of the determination model generation processing in the first embodiment.

[Data Management Processing]

First, in the determination model generation processing, processing of storing the first training data DT1 in the information storage area 130 (hereinafter, also referred to as data management processing) will be described. FIG. 11 is a flowchart illustrating the data management processing.

As illustrated in FIG. 11, for example, the data reception unit 111 stands by until receiving a plurality of pieces of training data DT1 transmitted from the operation terminal 2 (NO in S21).

Then, in the case of receiving the plurality of pieces of training data DT1 (YES in S21), the data management unit 112 stores the plurality of pieces of training data DT1 received in the processing in S21 in the information storage area 130 (S22).

[Main Processing of Determination Model Generation Processing]

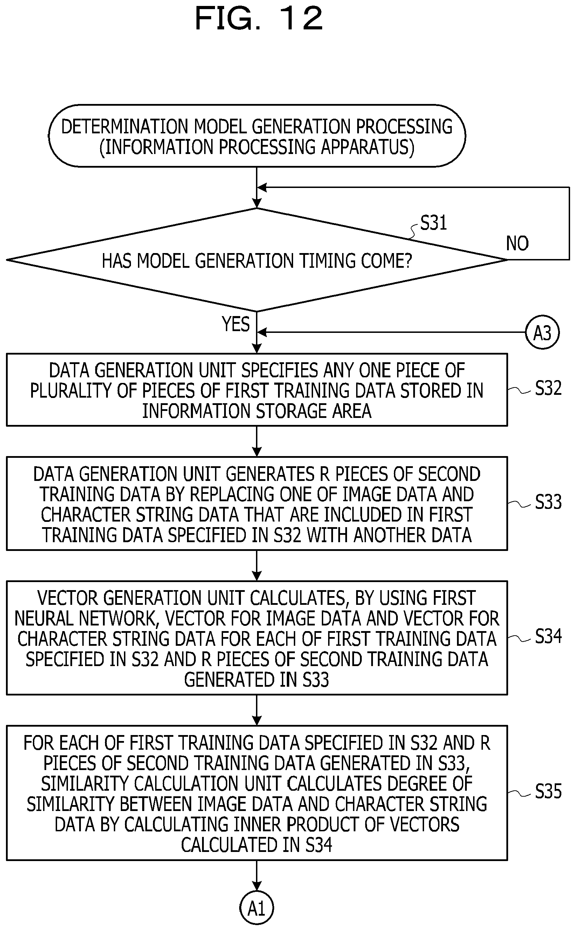

Next, main processing of the determination model generation processing will be described. FIGs. 12 to 16 are flowcharts illustrating the main processing of the determination model generation processing.

As illustrated in FIG. 12, the data generation unit 113 stands by until a model generation timing comes (NO in S31).

Then, in a case where the model generation timing comes (YES in S31), the data generation unit 113 specifies any one piece of first training data DT1 among the plurality of pieces of first training data DT1 stored in the information storage area 130 (S32).

Subsequently, the data generation unit 113 generates R pieces of second training data DT2 by replacing one of image data IM1 and character string data ST1 that are included in the first training data DT1 specified in the processing in S32 with another data (S33). Hereinafter, details of the processing in S33 will be described.

[Details (1) of Processing in S33]

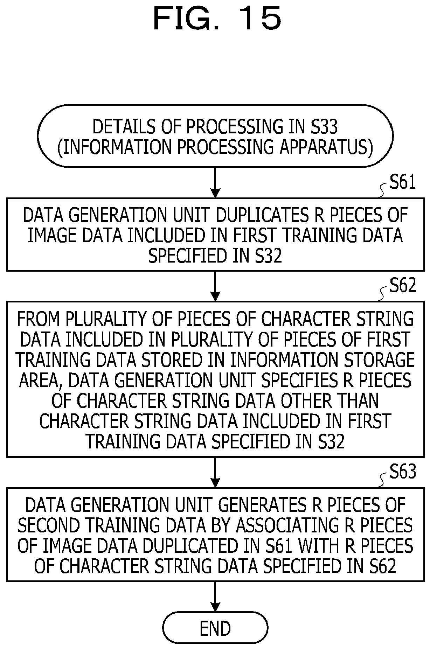

First, a first example of the processing in S33 will be described. FIG. 15 is a flowchart illustrating the details of the processing in S33.

As illustrated in FIG. 15, for example, the data generation unit 113 duplicates R pieces of image data IM1 included in the first training data DT1 specified in the processing in S32 (S61).

Then, for example, from a plurality of pieces of character string data ST1 included in the plurality of pieces of first training data DT1 stored in the information storage area 130, the data generation unit 113 specifies R pieces of character string data ST1 other than character string data ST1 included in the first training data DT1 specified in the processing in S32 (S62).

Thereafter, for example, the data generation unit 113 generates R pieces of second training data DT2 by associating the R pieces of image data IM1 duplicated in the processing in S61 with the R pieces of character string data ST1 specified in the processing in S62 (S63).

[Details (2) of Processing in S33]

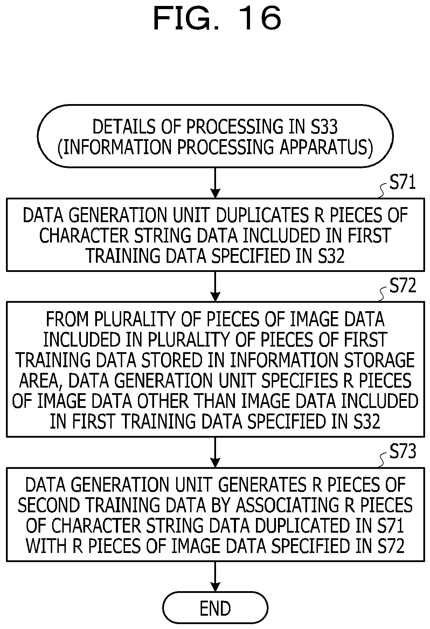

Next, a second example of the processing in S33 will be described. FIG. 16 is another flowchart illustrating the details of the processing in S33.

For example, the data generation unit 113 duplicates R pieces of character string data ST1 included in the first training data DT1 specified in the processing in S32 (S71).

Then, for example, from a plurality of pieces of image data IM1 included in the plurality of pieces of first training data DT1 stored in the information storage area 130, the data generation unit 113 specifies R pieces of image data IM1 other than image data IM1 included in the first training data DT1 specified in the processing in S32 (S72).

Thereafter, for example, the data generation unit 113 generates R pieces of second training data DT2 by associating the R pieces of character string data ST1 duplicated in the processing in S71 with the R pieces of image data IM1 specified in the processing in S72 (S73).

For example, the information processing apparatus 1 may facilitate learning about a relationship between pieces of training data by generating a determination model by using a plurality of pieces of second training data DT2 in which either image data IM1 or character string data ST1 is matched.

Therefore, the information processing apparatus 1 may generate the determination model that accurately determines correspondence between the image data IM1 and the character string data ST1.

Note that, for example, the data generation unit 113 may generate a part of the R pieces of second training data DT2 by performing the processing in S61 to S63, and may generate another part of the R pieces of second training data DT2 by performing the processing in S71 to S73.

Furthermore, for example, the data generation unit 113 may generate the R pieces of second training data DT2 by performing the processing in S61 to S63 and the processing in S71 to S73 in parallel.

Returning to FIG. 12, the vector generation unit 114 calculates, by using the first neural network NN1, an image vector for the image data IM1 and a character string vector for the character string data ST1 for each of the first training data DT1 specified in the processing in S32 and the R pieces of second training data DT2 generated in the processing in S33 (S34).

For example, the vector generation unit 114 inputs, to the first neural network NN1, each of the first training data DT1 specified in the processing in S32 and the R pieces of second training data DT2 generated in the processing in S33. Then, the vector generation unit 114 acquires each of the image vectors and the character string vectors that are output from the first neural network NN1 as an image vector and a character string vector for each of the first training data DT1 specified in the processing in S32 and the R pieces of second training data DT2 generated in the processing in S33.

Then, for each of the first training data DT1 specified in the processing in S32 and the R pieces of second training data DT2 generated in the processing in S33, the similarity calculation unit 115 calculates a degree of similarity between the image data IM1 and the character string data ST1 by calculating an inner product of the vectors calculated in the processing in S34 (S35).

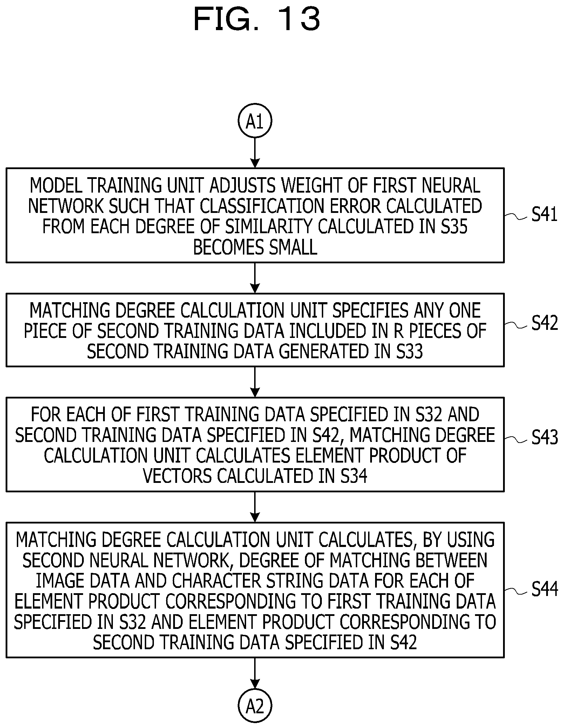

Subsequently, as illustrated in FIG. 13, the model training unit 116 adjusts the weight of the first neural network NN1 such that a classification error calculated from each degree of similarity calculated in the processing in S35 becomes small (S41).

For example, the model training unit 116 adjusts the weight of the first neural network NN1 such that a classification error L indicated in the following Equation (1) becomes small.

[Expression 1]

$$ L = -log \frac{e^{E_p}}{\sum_{i=0}^{R} e^{E_i}} \qquad \cdots \quad (1) $$

In the above Equation (1), $E_i$ indicates a degree of similarity corresponding to an i-th piece of training data among the first training data DT1 specified in the processing in S32 and the R pieces of second training data DT2 generated in the processing in S33. Furthermore, $E_p$ indicates a degree of similarity corresponding to the first training data DT1 specified in the processing in S32.

Next, the matching degree calculation unit 117 specifies any one piece of second training data DT2 included in the R pieces of second training data DT2 generated in the processing in S33 (S42).

Then, for each of the first training data DT1 specified in the processing in S32 and the second training data DT2 specified in the processing in S42, the matching degree calculation unit 117 calculates an element product of the vectors calculated in the processing in S34 (S43).

Moreover, the matching degree calculation unit 117 calculates, by using the second neural network NN2, a degree of matching between the image data IM1 and the character string data ST1 for each of an element product corresponding to the first training data DT1 specified in the processing in S32 and an element product corresponding to the second training data DT2 specified in the processing in S42 (S44).

For example, the matching degree calculation unit 117 inputs each of the element products calculated in the processing in S44 to the second neural network NN2. Then, the matching degree calculation unit 117 acquires the degrees of matching output from the second neural network NN2 as a degree of matching between the image data IM1 and the character string data ST1 that are included in the first training data DT1 specified in the processing in S32 and a degree of matching between the image data IM1 and the character string data ST1 that are included in the second training data DT2 specified in the processing in S42.

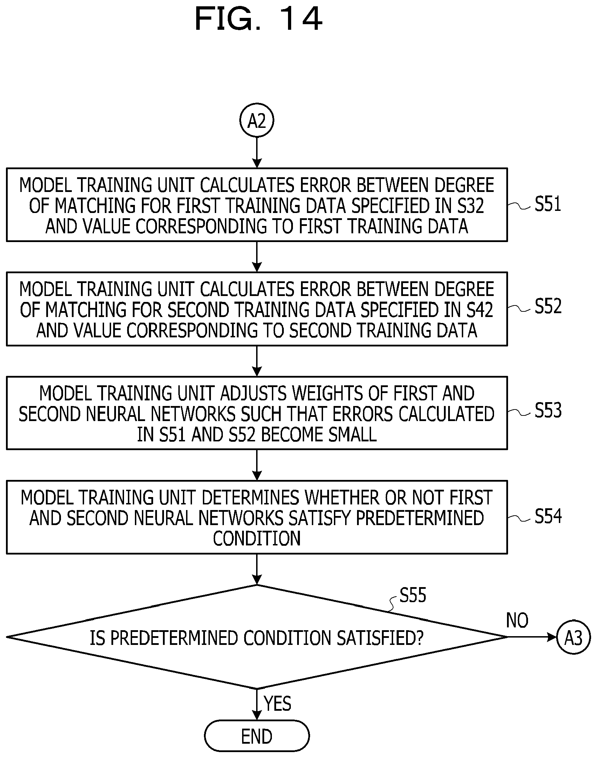

Subsequently, as illustrated in FIG. 14, the model training unit 116 calculates an error between the degree of matching for the first training data DT1 specified in the processing in S32 and a value corresponding to the first training data DT1 (S51).

Furthermore, the model training unit 116 calculates an error between the degree of matching for the second training data DT2 specified in the processing in S42 and a value corresponding to the second training data DT2 (S52).

Thereafter, the model training unit 116 adjusts the weights of the first neural network NN1 and the second neural network NN2 such that the errors calculated in the processing in S51 and S52 become small (S53).

For example, in a case where the degree of matching for the first training data DT1 specified in the processing in S32 is a value between 0 and 1, and the value corresponding to the first training data DT1 is 1, the model training unit 116 adjusts the weight of the second neural network NN2 such that the degree of matching for the first training data DT1 specified in the processing in S32 approaches 1. Furthermore, the model training unit 116 adjusts the weights of the first neural network NN1 and the second neural network NN2 such that the error between the degree of matching for the second training data DT2 specified in the processing in S42 and the value corresponding to the second training data DT2 becomes small.

Then, the model training unit 116 determines whether or not the first neural network NN1 and the second neural network NN2 satisfy a predetermined condition (S54).

For example, the model training unit 116 calculates the sum of the error calculated in the processing in S51 (error for the first training data DT1) and the error calculated in the processing in S52 (error for the second training data DT2). Subsequently, the model training unit 116 calculates, for example, an average of the calculated sum and the classification error calculated from each degree of similarity calculated in the processing in S35. Then, for example, in a case where the calculated average is below a predetermined threshold, the model training unit 116 determines that the first neural network NN1 and the second neural network NN2 satisfy the predetermined condition.

As a result, in a case where it is determined that the first neural network NN1 and the second neural network NN2 do not satisfy the predetermined condition (NO in S55), the information processing apparatus 1 performs the processing after S32 again.

On the other hand, in a case where it is determined that the first neural network NN1 and the second neural network NN2 satisfy the predetermined condition (YES in S55), the information processing apparatus 1 ends the main processing of the determination model generation processing.

[Data Estimation Processing (1)]

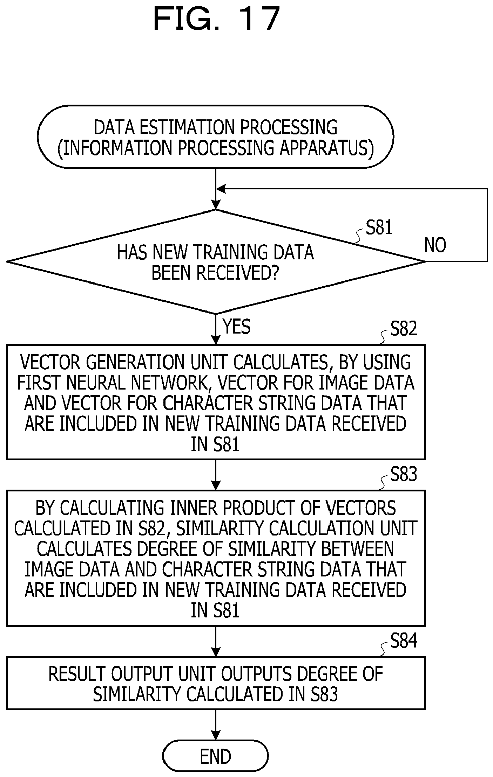

Next, in the determination model generation processing, a first example of processing of determining whether or not contents of image data IM2 and contents of character string data ST2 that are included in the new training data DT3 match (hereinafter, also referred to as data estimation processing) will be described. FIG. 17 is a flowchart illustrating the first example of the data estimation processing.

As illustrated in FIG. 17, for example, the data reception unit 111 stands by until receiving the new training data DT3 transmitted from the operation terminal 2 (NO in S81).

Then, in the case of receiving the new training data DT3 (YES in S81), the vector generation unit 114 calculates, by using the first neural network NN1, an image vector for the image data IM2 and a character string vector for the character string data ST2 that are included in the new training data DT3 received in the processing in S81 (S82).

For example, the vector generation unit 114 inputs the new training data DT3 to the first neural network NN1. Then, the vector generation unit 114 acquires the image vector and the character string vector that are output from the first neural network NN1 as an image vector and a character string vector for the new training data DT3.

Then, for example, by calculating an inner product of the vectors calculated in the processing in S82, the similarity calculation unit 115 calculates a degree of similarity between the image data IM2 and the character string data ST2 that are included in the new training data DT3 received in the processing in S81 (S83).

Thereafter, the result output unit 118 outputs, for example, the degree of similarity calculated in the processing in S83 (S84).

For example, the result output unit 118 outputs the degree of similarity calculated in the processing in S83 to the operation terminal 2.

Note that, for example, in a case where a degree of similarity for each of a plurality of pieces of new training data DT3 is calculated in the processing in S83, the result output unit 118 may output information indicating each of the plurality of pieces of new training data DT3 in descending order of the degree of similarity calculated in the processing in S83.

[Data Estimation Processing (2)]

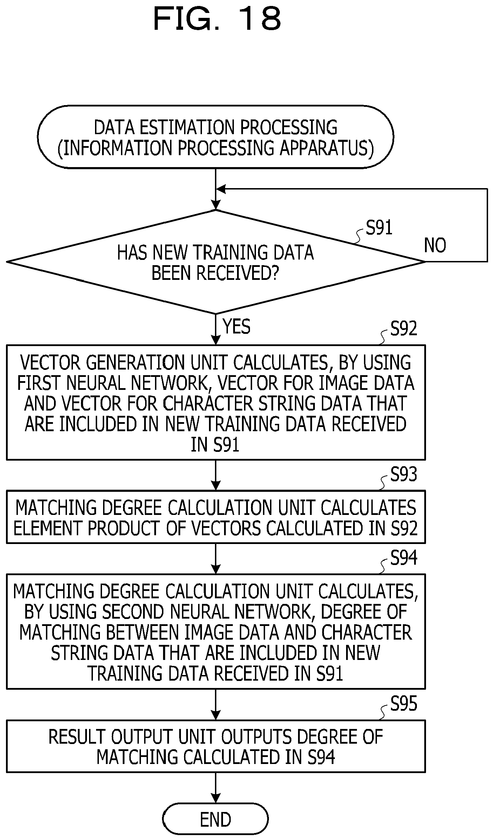

Next, a second example of the data estimation processing will be described. FIG. 18 is a flowchart illustrating the second example of the data estimation processing.

As illustrated in FIG. 18, for example, the data reception unit 111 stands by until receiving the new training data DT3 transmitted from the operation terminal 2 (NO in S91).

Then, in the case of receiving the new training data DT3 (YES in S91), the vector generation unit 114 calculates, by using the first neural network NN1, an image vector for the image data IM2 and a character string vector for the character string data ST2 that are included in the new training data DT3 received in the processing in S91 (S92).

Then, the matching degree calculation unit 117 calculates an element product of the vectors calculated in the processing in S92 (S93).

Moreover, the matching degree calculation unit 117 calculates, by using the second neural network NN2, a degree of matching between the image data IM2 and the character string data ST2 that are included in the new training data DT3 received in the processing in S91 (S94).

For example, the matching degree calculation unit 117 inputs the element product calculated in the processing in S94 to the second neural network NN2. Then, the matching degree calculation unit 117 acquires the degree of matching output from the second neural network NN2 as a degree of matching between the image data IM2 and the character string data ST2 that are included in the new training data DT3 received in the processing in S91.

Thereafter, the result output unit 118 outputs, for example, the degree of matching calculated in the processing in S94 (S95).

Note that, for example, in a case where a degree of matching for each of a plurality of pieces of new training data DT3 is calculated in the processing in S94, the result output unit 118 may output information indicating each of the plurality of pieces of new training data DT3 in descending order of the degree of matching calculated in the processing in S94.

[Specific Example (2) of Determination Model]

Next, a determination model MD2 in the first embodiment will be described. FIGs. 19 and 20 are diagrams illustrating processing of the determination model MD2 in the first embodiment. For example, FIGs. 19 and 20 are diagrams illustrating the processing of the determination model corresponding to the contents of FIGs. 12 to 18.

First, processing of the determination model MD2 in a learning stage will be described.

As illustrated in FIG. 19, the information processing apparatus 1 inputs, to the first neural network NN1, a pair of image data IM1 and character string data ST1 that are included in the first training data DT1 and pairs of image data IM1 and character string data ST1 that are included in the second training data DT2. For example, as illustrated in FIG. 19, the information processing apparatus 1 inputs, to the first neural network NN1, a plurality of pairs including a pair of image data IM1a and character string data ST1a that are included in the first training data DT1, a pair of image data IM1b and character string data ST1b that are included in the second training data DT2, and a pair of image data IM1c and character string data ST1c that are included in the second training data DT2.

Then, for example, in response to reception of input of the pair of image data IM1a and character string data ST1a, the first neural network NN1 calculates and outputs an image vector indicating characteristics of the image data IM1a and a character string vector indicating characteristics of the character string data ST1a. Similarly, for example, in response to reception of input of the pair of image data IM1b and character string data ST1b, the first neural network NN1 calculates and outputs an image vector indicating characteristics of the image data IM1b and a character string vector indicating characteristics of the character string data ST1b. Moreover, for example, in response to reception of input of the pair of image data IM1c and character string data ST1c, the first neural network NN1 calculates and outputs an image vector indicating characteristics of the image data IM1c and a character string vector indicating characteristics of the character string data ST1c.

Subsequently, the information processing apparatus 1 calculates, for example, an inner product of the image vector corresponding to the image data IM1a and the character string vector corresponding to the character string data ST1a as a degree of similarity between the image data IM1a and the character string data ST1a. Similarly, the information processing apparatus 1 calculates, for example, an inner product of the image vector corresponding to the image data IM1b and the character string vector corresponding to the character string data ST1b as a degree of similarity between the image data IM1b and the character string data ST1b. Moreover, the information processing apparatus 1 calculates, for example, an inner product of the image vector corresponding to the image data IM1c and the character string vector corresponding to the character string data ST1c as a degree of similarity between the image data IM1c and the character string data ST1c.

Thereafter, for example, the information processing apparatus 1 adjusts the weight of the first neural network NN1 such that a classification error calculated from the degree of similarity for each of the first training data DT1 and the second training data DT2 and information indicating the first training data DT1 (correct pair) becomes small.

Furthermore, the information processing apparatus 1 calculates, for example, an element product of the image vector corresponding to the image data IM1a and the character string vector corresponding to the character string data ST1a and an element product of the image vector corresponding to the image data IM1b and the character string vector corresponding to the character string data ST1b.

Then, the information processing apparatus 1 inputs, to the second neural network NN2, the element product corresponding to the image data IM1a and the character string data ST1a and the element product corresponding to the image data IM1b and the character string data ST1b.

Subsequently, for example, in response to reception of input of the element product corresponding to the image data IM1a and the character string data ST1a, the second neural network NN2 calculates and outputs a degree of matching between the image data IM1a and the character string data ST1a. Furthermore, for example, in response to reception of input of the element product corresponding to the image data IM1b and the character string data ST1b, the second neural network NN2 calculates and outputs a degree of matching between the image data IM1b and the character string data ST1b.

Moreover, the information processing apparatus 1 adjusts the weights of the first neural network NN1 and the second neural network NN2 such that an error between the degree of matching between the image data IM1a and the character string data ST1a and a value corresponding to the first training data DT1 (correct data) becomes small. Furthermore, the information processing apparatus 1 adjusts the weights of the first neural network NN1 and the second neural network NN2 such that an error between the degree of matching between the image data IM1b and the character string data ST1b and a value corresponding to the second training data DT2 becomes small.

Next, processing of the determination model MD2 in an inference stage will be described.

As illustrated in FIG. 20, the information processing apparatus 1 inputs, to the first neural network NN1, a pair of image data IM2 and character string data ST2 that are included in the new training data DT3.

Then, for example, in response to reception of input of the pair of image data IM2 and character string data ST2, the first neural network NN1 calculates and outputs an image vector indicating characteristics of the image data IM2 and a character string vector indicating characteristics of the character string data ST2.

Thereafter, the information processing apparatus 1 calculates, for example, an inner product of the image vector corresponding to the image data IM2 and the character string vector corresponding to the character string data ST2 as a degree of similarity between the image data IM2 and the character string data ST2.

Then, the information processing apparatus 1 outputs, for example, the calculated degree of similarity to the operation terminal 2 as a degree of similarity between the image data IM2 and the character string data ST2 that are included in the new training data DT3.

Furthermore, the information processing apparatus 1 calculates, for example, an element product of the image vector corresponding to the image data IM2 and the character string vector corresponding to the character string data ST2. Moreover, the information processing apparatus 1 inputs the calculated element product to the second neural network NN2.

Then, for example, in response to reception of input of the element product corresponding to the image data IM2 and the character string data ST2, the second neural network NN2 calculates and outputs a degree of matching between the image data IM2 and the character string data ST2.

Thereafter, the information processing apparatus 1 outputs, for example, the degree of matching output from the second neural network NN2 to the operation terminal 2 as a degree of matching between the image data IM2 and the character string data ST2 that are included in the new training data DT3.

As described above, the information processing apparatus 1 in the present embodiment generates, on the basis of the first training data DT1 in which the image data IM1 and the character string data ST1 corresponding to the image data IM1 are associated with each other, the second training data DT2 by replacing one of the image data IM1 and the character string data ST1 that are included in the first training data DT1 with another data.

Then, the information processing apparatus 1 generates, by using the first training data DT1 and the second training data DT2 as input data, a determination model that outputs information indicating which piece of training data in the first training data DT1 and the second training data DT2 is training data in which correspondence between the image data IM1 and the character string data ST1 is correct.

For example, in a case where a plurality of pairs of image data IM1 and character string data ST1 to be input to the determination model is generated, the information processing apparatus 1 in the present embodiment combines different character string data ST1 with the same image data IM1. Furthermore, in this case, the information processing apparatus 1 combines different image data IM1 with the same character string data ST1. Then, the information processing apparatus 1 trains the determination model by using the generated plurality of pairs.

With this configuration, the information processing apparatus 1 may cause the determination model to learn a detailed relationship between pieces of the training data. Therefore, the information processing apparatus 1 may generate the determination model that accurately determines correspondence between the image data IM1 and the character string data ST1.

Note that, in the examples described above, a case has been described where the first neural network NN1 that generates image vectors from the image data IM1 and the image data IM2 and the first neural network NN1 that generates character string vectors from the character string data ST1 and the character string data ST2 are the same neural network, but these may be different neural networks from each other.

With this configuration, the information processing apparatus 1 may train the first neural network NN1 that generates the image vectors by using only the image data IM1, and may also train the first neural network NN1 that generates the character string vectors by using only the character string data ST1. Therefore, in this case, the information processing apparatus 1 does not need to train the first neural network NN1 by inputting the image data IM1 and the character string data ST1 at the same time, and may efficiently generate the first neural network NN1.

**Claims**

1. A determination model generation program that causes at least one computer to execute a process, the process comprising:

   generating, based on first training data in which image data and character string data that corresponds to the image data are associated with each other, second training data by replacing one of data included in the first training data selected from the image data and the character string data with another data; and
   generating, by using the first training data and the second training data as input data, a determination model that outputs information that indicates which training data selected from the first training data and the second training data is training data in which correspondence between the image data and the character string data is correct.

2. The determination model generation program according to claim 1, wherein
   generating the second training data includes generating, for each of a plurality of the first training data, a plurality of the second training data by replacing one of data included in each of the plurality of the first training data selected from the image data and the character string data with another data.

3. The determination model generation program according to claim 2, wherein
   the generating the second training data includes

   generating, for each of a first part of the plurality of the first training data, the plurality of the second training data by replacing the image data included in each of the first part of the plurality of the first training data with another data, and
   generating, for each of a second part of the plurality of the first training data, the plurality of the second training data by replacing the character string data included in each of the second part of the plurality of the first training data with another data.

4. The determination model generation program according to claim 1, wherein
   the generating the determination model includes

   calculating, for each of the first training data and the second training data, a degree of similarity between the image data and the character string data included in each of the first training data and the second training data, and
   using the degree and first information that indicates which training data selected in the first training data and the second training data is the first training data.

5. The determination model generation program according to claim 4, wherein
   the calculating includes calculating, for each of the first training data and the second training data, an inner product of the image data and the character string data included in each of the first training data and the second training data as the degree.

6. The determination model generation program according to claim 4, wherein the generating the determination model includes
   using the degree and the first information and second information that indicates whether or not the correspondence in each of the first training data and the second training data is correct.

7. An information processing apparatus comprising:

   a data generation unit that generates, based on first training data in which image data and character string data that corresponds to the image data are associated with each other, second training data by replacing one of data included in the first training data selected from the image data and the character string data with another data; and
   a model training unit that generates, by using the first training data and the second training data as input data, a determination model that outputs information that indicates which training data selected from the first training data and the second training data is training data in which correspondence between the image data and the character string data is correct.

8. The information processing apparatus according to claim 7, wherein the data generation unit that further generates the second training data includes generating, for each of a plurality of the first training data, a plurality of the second training data by replacing one of data included in each of the plurality of the first training data selected from the image data and the character string data with another data.

9. The information processing apparatus according to claim 8, wherein the data generation unit that further

generates, for each of a first part of the plurality of the first training data, the plurality of the second training data by replacing the image data included in each of the first part of the plurality of the first training data with another data, and

generates, for each of a second part of the plurality of the first training data, the plurality of the second training data by replacing the character string data included in each of the second part of the plurality of the first training data with another data.

10. The information processing apparatus according to claim 7, wherein the model training unit that further

calculates, for each of the first training data and the second training data, a degree of similarity between the image data and the character string data included in each of the first training data and the second training data, and

uses the degree and first information that indicates which training data selected in the first training data and the second training data is the first training data.

11. A determination model generation method for a computer to execute a process comprising:

generating, based on first training data in which image data and character string data that corresponds to the image data are associated with each other, second training data by replacing one of data included in the first training data selected from the image data and the character string data with another data; and

generating, by using the first training data and the second training data as input data, a determination model that outputs information that indicates which training data selected from the first training data and the second training data is training data in which correspondence between the image data and the character string data is correct.

12. The determination model generation method according to claim 13, wherein generating the second training data includes generating, for each of a plurality of the first training data, a plurality of the second training data by replacing one of data included in each of the plurality of the first training data selected from the image data and the character string data with another data.

13. The determination model generation method according to claim 14, wherein the generating the second training data includes

generating, for each of a first part of the plurality of the first training data, the plurality of the second training data by replacing the image data included in each of the first part of the plurality of the first training data with another data, and

generating, for each of a second part of the plurality of the first training data, the plurality of the second training data by replacing the character string data included in each of the second part of the plurality of the first training data with another data.

14. The determination model generation method according to claim 13, wherein the generating the determination model includes

calculating, for each of the first training data and the second training data, a degree of similarity between the image data and the character string data included in each of the first training data and the second training data, and

using the degree and first information that indicates which training data selected in the first training data and the second training data is the first training data.

# FIG. 1

OPERATION TERMINAL (2) ← → NW ← → INFORMATION PROCESSING APPARATUS (1)

10

# FIG. 2

MD11

CORRECT DATA

DEGREE OF MATCHING
(LIKELIHOOD OF CORRECT PAIR)

NN2

NN

IMAGE
VECTOR

$\otimes$

CHARACTER STRING
VECTOR

NN1

NN

IM1

IMAGE
DATA

ST1

CHARACTER
STRING
DATA

# FIG. 3

MD11

DEGREE OF MATCHING
(LIKELIHOOD OF CORRECT PAIR)

NN2

NN

IMAGE
VECTOR $\otimes$ CHARACTER STRING
VECTOR

NN1

NN

IM2

IMAGE
DATA

ST2

CHARACTER
STRING
DATA

FIG. 4

# FIG. 5

MD12

DEGREE OF MATCHING
(LIKELIHOOD OF CORRECT PAIR)

NN2

NN

IMAGE
VECTOR

⊗

CHARACTER STRING
VECTOR

NN1

NN

IM2

IMAGE
DATA

ST2

CHARACTER
STRING
DATA

# FIG. 6

INFORMATION PROCESSING APPARATUS 1

101 CPU

102 MEMORY
PROGRAM 110

105

104 INFORMATION STORAGE AREA 130

103 COMMUNICATION DEVICE

NW

2 OPERATION TERMINAL

# FIG. 7

INFORMATION PROCESSING APPARATUS ~1

### DATA RECEPTION UNIT ~111

### SIMILARITY CALCULATION UNIT ~115

### DATA MANAGEMENT UNIT ~112

### MODEL TRAINING UNIT ~116

### DATA GENERATION UNIT ~113

### MATCHING DEGREE CALCULATION UNIT ~117

### VECTOR GENERATION UNIT ~114

### RESULT OUTPUT UNIT ~117

FIRST TRAINING DATA ~DT1

SECOND TRAINING DATA ~DT2

# FIG. 8

```
   ┌────────────────────────────────────────────────┐
   │    DETERMINATION MODEL GENERATION PROCESSING    │
   │       (INFORMATION PROCESSING APPARATUS)        │
   └────────────────────────────────────────────────┘
                         │
                         ▼◄─────────────────────┐
                                                │
          ╱────────────────────────╲  S11       │
         ╱                           ╲          │  NO
        ╱  HAS MODEL GENERATION       ╲─────────┘
        ╲       TIMING COME?          ╱
         ╲                           ╱
          ╲────────────────────────╱
                    │ YES                    S12
                    ▼
```

| S12 |
| INFORMATION PROCESSING APPARATUS GENERATES, ON THE BASIS OF FIRST TRAINING DATA IN WHICH IMAGE DATA AND CHARACTER STRING DATA CORRESPONDING TO IMAGE DATA ARE ASSOCIATED WITH EACH OTHER, SECOND TRAINING DATA BY REPLACING ONE OF IMAGE DATA AND CHARACTER STRING DATA WITH ANOTHER DATA |

| S13 |
| INFORMATION PROCESSING APPARATUS GENERATES, BY USING FIRST TRAINING DATA AND SECOND TRAINING DATA AS INPUT DATA, DETERMINATION MODEL THAT OUTPUTS INFORMATION INDICATING WHICH PIECE OF TRAINING DATA IN FIRST TRAINING DATA AND SECOND TRAINING DATA IS TRAINING DATA IN WHICH CORRESPONDENCE BETWEEN IMAGE DATA AND CHARACTER STRING DATA IS CORRECT |

```
                    │
                    ▼
            ┌──────────────┐
            │     END      │
            └──────────────┘
```

# FIG. 9

MD1

CORRECT PAIR

⇕

DEGREE OF SIMILARITY IN EACH PAIR

| IMAGE VECTOR | CHARACTER STRING VECTOR | | IMAGE VECTOR | CHARACTER STRING VECTOR | · · · | IMAGE VECTOR | CHARACTER STRING VECTOR |

NN    NN1

| IM1a | ST1a | | IM1b | ST1b | · · · | IM1c | ST1c |

| IMAGE DATA | CHARACTER STRING DATA | | IMAGE DATA | CHARACTER STRING DATA | · · · | IMAGE DATA | CHARACTER STRING DATA |

EP 4 027 270 A1

# FIG. 10

MD1

CORRECT PAIR

⇕

DEGREE OF SIMILARITY IN PAIR

⇧

⊙

| IMAGE VECTOR | CHARACTER STRING VECTOR |

⇧ ⇧

| NN | NN1

⇧ IM2    ⇧ ST2

| IMAGE DATA | CHARACTER STRING DATA |

# FIG. 11

DATA MANAGEMENT PROCESSING
(INFORMATION PROCESSING APPARATUS)

S21

HAS TRAINING DATA BEEN RECEIVED? — NO

YES — S22

DATA MANAGEMENT UNIT STORES TRAINING DATA
RECEIVED IN S21 IN INFORMATION STORAGE AREA

END

# FIG. 12

```
┌─────────────────────────────────────────────────┐
│   DETERMINATION MODEL GENERATION PROCESSING      │
│      (INFORMATION PROCESSING APPARATUS)          │
└─────────────────────────────────────────────────┘
```

S31

HAS MODEL GENERATION TIMING COME? — NO

YES

A3

**S32**
DATA GENERATION UNIT SPECIFIES ANY ONE PIECE OF PLURALITY OF PIECES OF FIRST TRAINING DATA STORED IN INFORMATION STORAGE AREA

**S33**
DATA GENERATION UNIT GENERATES R PIECES OF SECOND TRAINING DATA BY REPLACING ONE OF IMAGE DATA AND CHARACTER STRING DATA THAT ARE INCLUDED IN FIRST TRAINING DATA SPECIFIED IN S32 WITH ANOTHER DATA

**S34**
VECTOR GENERATION UNIT CALCULATES, BY USING FIRST NEURAL NETWORK, VECTOR FOR IMAGE DATA AND VECTOR FOR CHARACTER STRING DATA FOR EACH OF FIRST TRAINING DATA SPECIFIED IN S32 AND R PIECES OF SECOND TRAINING DATA GENERATED IN S33

**S35**
FOR EACH OF FIRST TRAINING DATA SPECIFIED IN S32 AND R PIECES OF SECOND TRAINING DATA GENERATED IN S33, SIMILARITY CALCULATION UNIT CALCULATES DEGREE OF SIMILARITY BETWEEN IMAGE DATA AND CHARACTER STRING DATA BY CALCULATING INNER PRODUCT OF VECTORS CALCULATED IN S34

A1

# FIG. 13

(A1)

↓

MODEL TRAINING UNIT ADJUSTS WEIGHT OF FIRST NEURAL NETWORK SUCH THAT CLASSIFICATION ERROR CALCULATED FROM EACH DEGREE OF SIMILARITY CALCULATED IN S35 BECOMES SMALL — S41

↓

MATCHING DEGREE CALCULATION UNIT SPECIFIES ANY ONE PIECE OF SECOND TRAINING DATA INCLUDED IN R PIECES OF SECOND TRAINING DATA GENERATED IN S33 — S42

↓

FOR EACH OF FIRST TRAINING DATA SPECIFIED IN S32 AND SECOND TRAINING DATA SPECIFIED IN S42, MATCHING DEGREE CALCULATION UNIT CALCULATES ELEMENT PRODUCT OF VECTORS CALCULATED IN S34 — S43

↓

MATCHING DEGREE CALCULATION UNIT CALCULATES, BY USING SECOND NEURAL NETWORK, DEGREE OF MATCHING BETWEEN IMAGE DATA AND CHARACTER STRING DATA FOR EACH OF ELEMENT PRODUCT CORRESPONDING TO FIRST TRAINING DATA SPECIFIED IN S32 AND ELEMENT PRODUCT CORRESPONDING TO SECOND TRAINING DATA SPECIFIED IN S42 — S44

↓

(A2)

# FIG. 14

(A2)

| MODEL TRAINING UNIT CALCULATES ERROR BETWEEN DEGREE OF MATCHING FOR FIRST TRAINING DATA SPECIFIED IN S32 AND VALUE CORRESPONDING TO FIRST TRAINING DATA | S51 |

| MODEL TRAINING UNIT CALCULATES ERROR BETWEEN DEGREE OF MATCHING FOR SECOND TRAINING DATA SPECIFIED IN S42 AND VALUE CORRESPONDING TO SECOND TRAINING DATA | S52 |

| MODEL TRAINING UNIT ADJUSTS WEIGHTS OF FIRST AND SECOND NEURAL NETWORKS SUCH THAT ERRORS CALCULATED IN S51 AND S52 BECOME SMALL | S53 |

| MODEL TRAINING UNIT DETERMINES WHETHER OR NOT FIRST AND SECOND NEURAL NETWORKS SATISFY PREDETERMINED CONDITION | S54 |

S55

IS PREDETERMINED CONDITION SATISFIED?                    NO → (A3)

YES

END

# FIG. 15

```
      ╭─────────────────────────────────────────╮
      │      DETAILS OF PROCESSING IN S33         │
      │   (INFORMATION PROCESSING APPARATUS)      │
      ╰─────────────────────────────────────────╯
                         │
                         ▼                    ┌S61
   ┌─────────────────────────────────────────────┐
   │ DATA GENERATION UNIT DUPLICATES R PIECES OF   │
   │ IMAGE DATA INCLUDED IN FIRST TRAINING DATA    │
   │            SPECIFIED IN S32                    │
   └─────────────────────────────────────────────┘
                         │
                         ▼                    ┌S62
   ┌─────────────────────────────────────────────┐
   │ FROM PLURALITY OF PIECES OF CHARACTER STRING  │
   │ DATA INCLUDED IN PLURALITY OF PIECES OF FIRST │
   │ TRAINING DATA STORED IN INFORMATION STORAGE   │
   │ AREA, DATA GENERATION UNIT SPECIFIES R PIECES │
   │    OF CHARACTER STRING DATA OTHER THAN         │
   │  CHARACTER STRING DATA INCLUDED IN FIRST       │
   │      TRAINING DATA SPECIFIED IN S32            │
   └─────────────────────────────────────────────┘
                         │
                         ▼                    ┌S63
   ┌─────────────────────────────────────────────┐
   │  DATA GENERATION UNIT GENERATES R PIECES OF   │
   │ SECOND TRAINING DATA BY ASSOCIATING R PIECES  │
   │ OF IMAGE DATA DUPLICATED IN S61 WITH R PIECES │
   │  OF CHARACTER STRING DATA SPECIFIED IN S62     │
   └─────────────────────────────────────────────┘
                         │
                         ▼
                  ╭────────────╮
                  │    END      │
                  ╰────────────╯
```

# FIG. 16

DETAILS OF PROCESSING IN S33
(INFORMATION PROCESSING APPARATUS)

S71

DATA GENERATION UNIT DUPLICATES R PIECES OF
CHARACTER STRING DATA INCLUDED IN FIRST
TRAINING DATA SPECIFIED IN S32

S72

FROM PLURALITY OF PIECES OF IMAGE DATA
INCLUDED IN PLURALITY OF PIECES OF FIRST
TRAINING DATA STORED IN INFORMATION STORAGE
AREA, DATA GENERATION UNIT SPECIFIES R PIECES
OF IMAGE DATA OTHER THAN IMAGE DATA INCLUDED
IN FIRST TRAINING DATA SPECIFIED IN S32

S73

DATA GENERATION UNIT GENERATES R PIECES OF
SECOND TRAINING DATA BY ASSOCIATING R PIECES
OF CHARACTER STRING DATA DUPLICATED IN S71
WITH R PIECES OF IMAGE DATA SPECIFIED IN S72

END

# FIG. 17

```
        DATA ESTIMATION PROCESSING
     (INFORMATION PROCESSING APPARATUS)
```

HAS NEW TRAINING DATA BEEN RECEIVED? — S81 — NO

↓ YES

S82

VECTOR GENERATION UNIT CALCULATES, BY USING FIRST NEURAL NETWORK, VECTOR FOR IMAGE DATA AND VECTOR FOR CHARACTER STRING DATA THAT ARE INCLUDED IN NEW TRAINING DATA RECEIVED IN S81

S83

BY CALCULATING INNER PRODUCT OF VECTORS CALCULATED IN S82, SIMILARITY CALCULATION UNIT CALCULATES DEGREE OF SIMILARITY BETWEEN IMAGE DATA AND CHARACTER STRING DATA THAT ARE INCLUDED IN NEW TRAINING DATA RECEIVED IN S81

S84

RESULT OUTPUT UNIT OUTPUTS DEGREE OF SIMILARITY CALCULATED IN S83

END

# FIG. 18

DATA ESTIMATION PROCESSING
(INFORMATION PROCESSING APPARATUS)

S91
HAS NEW TRAINING DATA
BEEN RECEIVED? — NO

YES — S92

VECTOR GENERATION UNIT CALCULATES, BY USING
FIRST NEURAL NETWORK, VECTOR FOR IMAGE DATA
AND VECTOR FOR CHARACTER STRING DATA THAT
ARE INCLUDED IN NEW TRAINING DATA RECEIVED
IN S91

S93

MATCHING DEGREE CALCULATION UNIT CALCULATES
ELEMENT PRODUCT OF VECTORS CALCULATED IN S92

S94

MATCHING DEGREE CALCULATION UNIT CALCULATES,
BY USING SECOND NEURAL NETWORK, DEGREE OF
MATCHING BETWEEN IMAGE DATA AND CHARACTER
STRING DATA THAT ARE INCLUDED IN NEW
TRAINING DATA RECEIVED IN S91

S95

RESULT OUTPUT UNIT OUTPUTS DEGREE OF
MATCHING CALCULATED IN S94

END

# FIG. 19

CORRECT DATA

DEGREE OF SIMILARITY IN EACH PAIR

CORRECT DATA ⟷ LIKELIHOOD THAT PAIR IS CORRECT

CORRECT DATA ⟷ LIKELIHOOD THAT PAIR IS CORRECT

MD2

NN1

NN2

NN

CHARACTER STRING VECTOR

IMAGE VECTOR

CHARACTER STRING VECTOR

IMAGE VECTOR

CHARACTER STRING VECTOR

IMAGE VECTOR

ST1c — CHARACTER STRING DATA

IM1c — IMAGE DATA

ST1b — CHARACTER STRING DATA

IM1b — IMAGE DATA

ST1a — CHARACTER STRING DATA

IM1a — IMAGE DATA

# FIG. 20

DEGREE OF MATCHING
(LIKELIHOOD THAT PAIR IS CORRECT)

MD2

NN2

DEGREE OF
SIMILARITY IN PAIR

NN

IMAGE
VECTOR

CHARACTER
STRING
VECTOR

NN1

NN

IM2

ST2

IMAGE
DATA

CHARACTER
STRING
DATA

Europäisches
Patentamt

European
Patent Office

Office européen
des brevets

**EUROPEAN SEARCH REPORT**

Application Number

EP 21 20 3124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIANLANG CHEN ET AL: "Adaptive Offline Quintuplet Loss for Image-Text Matching", ARXIV.ORG, CORNELL UNIVERSITY LIBRARY, 201 OLIN LIBRARY CORNELL UNIVERSITY ITHACA, NY 14853, 22 July 2020 (2020-07-22), XP081706212, * abstract; figures 1, 2 * * section 3.3 * * section 4.2 * * section 4.3 * * section 7.1 * * page 3, line 7 - line 16 * * page 7, line 8 - line 13 * * page 10, line 8 - line 23 * * equations 3, 4, 5 * ----- | 1-14 | INV. G06N3/08 G06N3/04 |
| X | LI KUNPENG ET AL: "Visual Semantic Reasoning for Image-Text Matching", 2019 IEEE/CVF INTERNATIONAL CONFERENCE ON COMPUTER VISION (ICCV), IEEE, 27 October 2019 (2019-10-27), pages 4653-4661, XP033723868, DOI: 10.1109/ICCV.2019.00475 [retrieved on 2020-02-24] * abstract * * section 1, lines 4-6 * * section 3.4 * * section 4 * * equation 8 * ----- -/-- | 1-14 | TECHNICAL FIELDS SEARCHED (IPC) G06N |

The present search report has been drawn up for all claims

| Place of search | Date of completion of the search | Examiner |
|---|---|---|
| The Hague | 19 April 2022 | Aoun, Marc |

EPO FORM 1503 03.82 (P04C01)

Europäisches
Patentamt

European
Patent Office

Office européen
des brevets

## EUROPEAN SEARCH REPORT

Application Number

**EP 21 20 3124**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JIASEN LU ET AL: "ViLBERT: Pretraining Task-Agnostic Visiolinguistic Representations for Vision-and-Language Tasks", ARXIV.ORG, CORNELL UNIVERSITY LIBRARY, 201 OLIN LIBRARY CORNELL UNIVERSITY ITHACA, NY 14853, 6 August 2019 (2019-08-06), XP081456681, * abstract; figures 3b, 4 * * section 3.1 * * section 3.2 * * page 4, line 36 – line 43 * ----- | 1-14 | |

TECHNICAL FIELDS
SEARCHED      (IPC)

The present search report has been drawn up for all claims

| Place of search | Date of completion of the search | Examiner |
|---|---|---|
| The Hague | 19 April 2022 | Aoun, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)